# EUROPEAN PATENT APPLICATION

(11) **EP 4 468 041 A1**
(43) Date of publication of application: **27.11.2024**
(21) Application number: 22928876.6
(22) Date of filing: 07.11.2022
(51) Int. Cl.: G02B 5/02, F21S 2/00, F21V 5/00, F21V 9/40, G02B 5/08, G02F 1/13357, F21Y 115/10, F21Y 115/30

(54) **COMBINED LIGHT DIFFUSION SHEET, BACKLIGHT UNIT, LIQUID CRYSTAL DISPLAY DEVICE, AND INFORMATION EQUIPMENT**

(30) Priority: 28.02.2022 JP 2022029906; 25.04.2022 JP 2022071437
(71) Applicant: KEIWA Incorporated, Tokyo 103-0025 (JP)
(72) Inventor: KARIYA, Yu, Tokyo 103-0025 (JP); SHIBA, Satoshi, Tokyo 103-0025 (JP); SUKIGARA, Masayuki, Tokyo 103-0025 (JP)
(74) Representative: Behr, Wolfgang
(86) International application number: PCT/JP2022/041403
(87) International publication number: WO 2023/162358

(57) **Abstract**

A combined light diffusion sheet 100 includes a light reflection layer 101 configured to reflect visible light and a light diffusion layer 43. An average light reflectance of the light reflection layer 101 against visible light is 50% or more and 90% or less. The light reflection layer 101 may be provided on a base material which is the same as the light diffusion layer 43 is provided, or may be provided on a base material which is different from the light diffusion layer 43 is provided.

## Description

### TECHNICAL FIELD

The present disclosure relates to a combined light diffusion sheet, a backlight unit, a liquid crystal display device, and an information equipment.

### BACKGROUND ART

In recent years, liquid crystal display devices (hereinafter referred to as liquid crystal displays in some cases) have been widely used as display devices for various information equipment such as smartphones and tablet terminals. A major type of a backlight of a liquid crystal display is a direct type in which light sources are arranged on a back surface of a liquid crystal panel, or an edge light type in which light sources are arranged near a side surface of a liquid crystal panel.

When the direct type backlight is adopted, a light diffusion member (a light diffusion plate, a light diffusion sheet, or a light diffusion film) is used to avoid making the light sources themselves such as light emitting diodes (LEDs) traceable through a light-emitting surface and improve uniformity of in-plane luminance (see, e.g., Patent Document 1).

There have been attempts to improve the luminance uniformity by adopting a laminate of a plurality of light diffusion sheets in a direct type backlight unit of a thin display for a laptop computer, a tablet type computer, or the like.

### CITATION LIST

### PATENT DOCUMENT

Patent Document 1: Japanese Unexamined Patent Publication No. 2011-129277

### SUMMARY OF THE INVENTION

### TECHNICAL PROBLEM

However, sufficient luminance uniformity has not been obtained yet with traditional light diffusion sheets.

It is an object of the present disclosure to improve the luminance uniformity of a backlight unit.

### SOLUTION TO THE PROBLEM

To achieve the above object, a first combined light diffusion sheet of the present disclosure includes: a light reflection layer configured to reflect visible light; and a light diffusion layer provided on a same base material as the light reflection layer is provided, wherein an average light reflectance of the light reflection layer against visible light is 50% or more and 90% or less.

The first combined light diffusion sheet of the present disclosure includes the light reflection layer configured to reflect visible light. Thus, light from the light sources is reflected multiple times, thereby achieving greater improvement in the luminance uniformity than when the light reflection layer is not provided.

In the first combined light diffusion sheet of the present disclosure, the light diffusion layer has a first surface provided with a plurality of recesses each having a substantially inverted polygon pyramid shape or a substantially inverted truncated polygon pyramid shape, and a second surface as a flat surface or a matte surface, and the light reflection layer may be provided on the second surface. Accordingly, the light reflection layer can be easily provided on the second surface of the light diffusion layer by, for example, printing an ink.

Note that, regarding the light diffusion sheet of the present disclosure, considering difficulties in formation of a recess having a geometrically exact inverted polygon pyramid shape or inverted truncated polygon pyramid shape by an ordinary shape transfer technique, the terms "substantially inverted polygon pyramid" or "substantially inverted truncated polygon pyramid" are used. However, it is needless to say that these terms include shapes that can be regarded as a true or approximately inverted polygon pyramid or inverted truncated polygon pyramid.

A second combined light diffusion sheet of the present disclosure includes a light reflection layer configured to reflect visible light; and a light diffusion layer provided on a base material which is different from the light reflection layer is provided. An average light reflectance of the light reflection layer against visible light is 50% or more and 90% or less.

The second combined light diffusion sheet of the present disclosure includes the light reflection layer configured to reflect visible light. Thus, light from the light sources is reflected multiple times, thereby achieving greater improvement in the luminance uniformity than when the light reflection layer is not provided.

In the first or second combined light diffusion sheet of the present disclosure, an average light reflectance of the light reflection layer against visible light may be 60% or more and 90% or less. This enables further improvement in the luminance uniformity.

In the first or second combined light diffusion sheet of the present disclosure, the light diffusion layer may include two or more light diffusion layers. This enables further improvement in the luminance uniformity.

In the first or second combined light diffusion sheet of the present disclosure, the light reflection layer may include two or more light reflection layers. This enables further improvement in the luminance uniformity.

In the first or second combined light diffusion sheet of the present disclosure, the light diffusion layer may have a thickness of 50 µm or more and 1200 µm or less. This enables reduction in the thickness of the liquid crystal display with achievement in the light diffusing effect by the light diffusion layer.

Note that, in the first or second combined light diffusion sheet of the present disclosure, the "light diffusion layer" may be a "light diffusion sheet," or may be a plate-like "light diffusion plate" or a film-like "light diffusion film."

A backlight unit of the present disclosure is a backlight unit built in a liquid crystal display device so as to lead light emitted from a plurality of light sources toward a display screen via a luminance enhancement sheet configured to increase luminance of the light. The first or second combined light diffusion sheet of the present disclosure is provided between the luminance enhancement sheet and the plurality of light sources.

The backlight unit of the present disclosure includes the first or second combined light diffusion sheet of the present disclosure, and thus the luminance uniformity is improved.

The backlight unit of the present disclosure may further include a color conversion sheet provided between the luminance enhancement sheet and the plurality of light sources and configured to convert a wavelength of light emitted from the plurality of light sources. Accordingly, the backlight unit can be structured even when light sources other than white light sources are adopted as the light sources.

In the backlight unit of the present disclosure, the plurality of light sources may be arranged on a reflective sheet provided opposite to the display screen when viewed from the combined light diffusion sheet. Accordingly, multiple reflections of light between the reflective sheet and the combined light diffusion sheet further improve the luminance uniformity.

In the backlight unit of the present disclosure, the combined light diffusion sheet may include the light diffusion layer including a plurality of light diffusion layers, and the light reflection layer may be provided closer to the luminance enhancement sheet than a light diffusion layer which is one of the plurality of the light diffusion layers and which is closest to the plurality of light sources. Accordingly, the light reflection layer can provide sufficient effect of improvement in the luminance uniformity. In this case, when the light diffusion layer includes three or more light diffusion layers, and the light reflection layer is provided closer to the luminance enhancement sheet than a light diffusion layer which is one of the plurality of the light diffusion layers and which is second closest to the plurality of light sources, the light reflection layer can provide greater effect of improvement in the luminance uniformity. In particular, when the light reflection layer is provided closer to the luminance enhancement sheet than a light diffusion layer which is one of the plurality of the light diffusion layers and which is most distant from the plurality of light sources, the light reflection layer can provide still greater effect of improvement in the luminance uniformity.

In the backlight unit of the present disclosure, the combined light diffusion sheet may include the light diffusion layer including a plurality of light diffusion layers, and the light reflection layer may be provided on a light incident surface of a light diffusion layer which is one of the plurality of the light diffusion layers and which is most distant from the plurality of light sources. Accordingly, the light reflection layer can exhibit more significant effect of improvement in the luminance uniformity.

In the backlight unit of the present disclosure, the combined light diffusion sheet may include the light diffusion layer including a plurality of light diffusion layers each provided on a base material which is different from the light reflection layer is provided; and the light reflection layer may be arranged between a light diffusion layer which is one of the plurality of the light diffusion layers and which is most distant from the plurality of light sources and a light diffusion layer which is another one of the plurality of light diffusion layers and which is second distant from the plurality of light sources. Accordingly, the light reflection layer can exhibit more significant effect of improvement in the luminance uniformity.

A liquid crystal display device of the present disclosure includes the above backlight unit of the present disclosure and a liquid crystal display panel.

The liquid crystal display device of the present disclosure includes the above backlight unit of the present disclosure, and thus the luminance uniformity can be improved.

An information equipment of the present disclosure includes the above liquid crystal display device of the present disclosure.

The information equipment of the present disclosure includes the liquid crystal display device of the present disclosure, and thus the luminance uniformity can be improved.

### ADVANTAGES OF THE INVENTION

According to the present disclosure, the luminance uniformity of a backlight unit can be improved.

### BRIEF DESCRIPTION OF THE DRAWINGS

FIG. 1 is a cross-sectional view of a liquid crystal display device of an embodiment.
FIG. 2 is a cross-sectional view of a backlight unit of an embodiment.
FIG. 3 is a plan view showing an exemplary arrangement of light sources in the backlight unit shown in FIG. 2.
FIG. 4 is a perspective view of a light diffusion layer constituting a combined light diffusion sheet of an embodiment.
FIG. 5 is a cross-sectional view of a backlight unit of Modification 1.
FIG. 6 is a cross-sectional view of a backlight unit of Modification 2.
FIG. 7 is a cross-sectional view of a backlight unit of Modification 3.
FIG. 8 is a cross-sectional view of a backlight unit of Modification 4.
FIG. 9 is a cross-sectional view of a backlight unit of Modification 5.
FIG. 10 is a view showing the shape of a square pyramid on a roll used for forming a resin sheet to become the light diffusion layer of Examples.

### DESCRIPTION OF EMBODIMENT

### (Embodiment)

Embodiments of the present disclosure will be described below with reference to the drawings. Note that the scope of the present disclosure is not limited to the following embodiments, and may be altered in any way within the scope of the technical concept of the present disclosure.

### <Liquid Crystal Display Device>

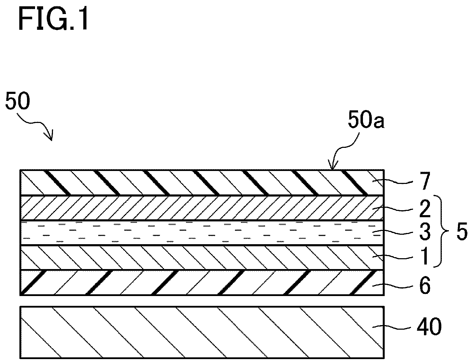

As shown in FIG. 1, a liquid crystal display device 50 of the present embodiment includes a liquid crystal display panel 5, a first polarizing plate 6 attached to a lower surface of the liquid crystal display panel 5, a second polarizing plate 7 attached to an upper surface of the liquid crystal display panel 5, and a backlight unit 40 provided on a back surface side of the liquid crystal display panel 5 with the first polarizing plate 6 interposed. The liquid crystal display panel 5 includes a TFT substrate 1 and a CF substrate 2 provided so as to face each other, a liquid crystal layer 3 provided between the TFT substrate 1 and the CF substrate 2, and a sealing (not shown) provided in a frame shape to seal the liquid crystal layer 3 between the TFT substrate 1 and the CF substrate 2.

The shape of a display screen 50a of the liquid crystal display device 50 viewed from the front (the top in Figure 1) is basically a rectangle or a square. Alternatively, the shape may be any shape such as a rectangle with rounded corners, an oval, a circle, a trapezoid, or the shape of an instrument panel of an automobile.

The liquid crystal display device 50 applies a voltage of a predetermined magnitude to the liquid crystal layer 3 in sub-pixels corresponding to pixel electrodes, thereby changing the alignment state of the liquid crystal layer 3. This adjusts the transmittance of light incident from the backlight unit 40 through the first polarizing plate 6 and emits light through the second polarizing plate 7 to display an image.

The liquid crystal display device 50 of the present embodiment is used as a display device built in various information equipment (e.g., an in-vehicle device such as a car navigation system, a personal computer, a mobile phone, a portable information terminal, a portable game machine, a copying machine, a ticket vending machine, an automated teller machine, and the like).

The TFT substrate 1 includes, for example, a plurality of TFTs arranged in a matrix on a glass substrate, an interlayer insulating film arranged in such a manner as to cover the TFTs, a plurality of pixel electrodes arranged in a matrix on the interlayer insulating film and connected to the TFTs, respectively, and an alignment film arranged in such a manner as to cover the pixel electrodes. The CF substrate 2 includes, for example, a black matrix arranged in a lattice manner on a glass substrate, a color filter including a red layer, a green layer, and a blue layer arranged between lattices of the black matrix, a common electrode arranged in such a manner as to cover the black matrix and the color filter, and an alignment film arranged in such a manner as to cover the common electrode. The liquid crystal layer 3 is made of, for example, a nematic liquid crystal material containing liquid crystal molecules having electro-optical characteristics. The first polarizing plate 6 and the second polarizing plate 7 each includes, for example, a polarizer layer having a polarization axis in one direction, and a pair of protective layers arranged in such a manner as to sandwich the polarizer layer.

### <Backlight Unit>

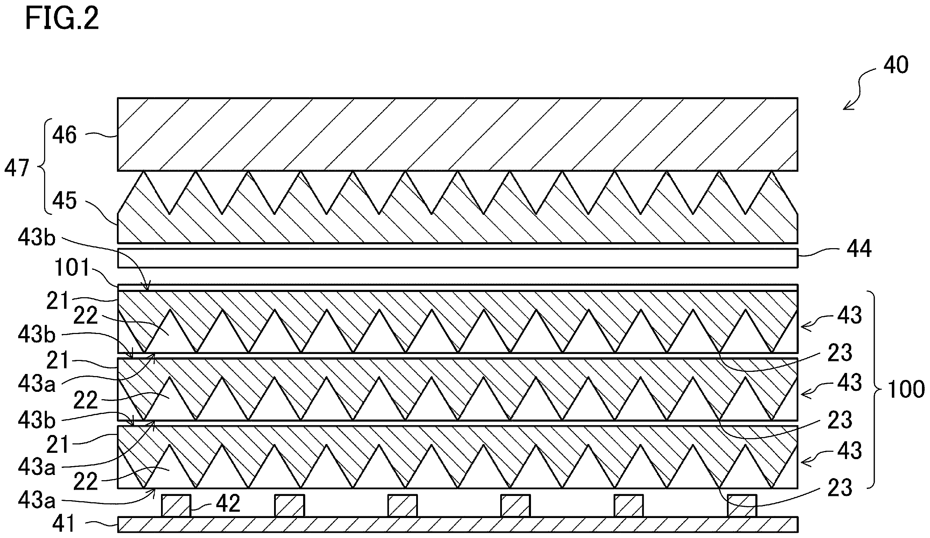

As shown in FIG. 2, the backlight unit 40 of the present embodiment includes a reflective sheet 41, a plurality of small light sources 42 two-dimensionally arranged on the reflective sheet 41, a combined light diffusion sheet 100 arranged above the plurality of small light sources 42, a color conversion sheet 44 arranged above the combined light diffusion sheet 100, and a luminance enhancement sheet 47 arranged above the color conversion sheet 44. The combined light diffusion sheet 100 will be detailed in detail later.

### [Reflective Sheet]

The reflective sheet 41 is formed of, for example, a white polyethylene terephthalate resin film, a silver-deposited film, or the like.

### [Light Source]

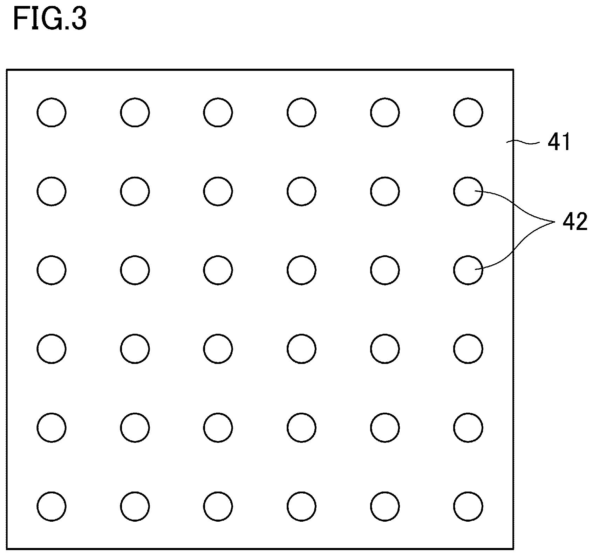

The type of the small light sources 42 is not particularly limited. For example, an LED element, a laser element, or the like may be adopted, and an LED element may be adopted for the sake of costs, productivity, and the like. To adjust a light emission angle of each LED element to serve as the small light source 42, a lens may be attached to the LED element. For example, as shown in FIG. 3, a plurality of small light sources 42 including LED elements each having a size of several mm squares may be arranged on the reflective sheet 41 in a two-dimensional array at regular intervals. Each of the small light sources 42 may have a rectangular shape in a plan view, where each side may be 10 µm or more (preferably 50 µm or more) and 20 mm or less (preferably 10 mm or less, more preferably 5 mm or less). The number of the small light sources 42 is not limited. However, to be distributed, the plurality of small light sources 42 may be arranged regularly on the reflective sheet 41 in one preferred embodiment. The "arranged regularly" means arrangement with a certain regularity. Examples include the case where the small light sources 42 are arranged at equal intervals. If the small light sources 42 are arranged at equal intervals, the distance between the centers of two adjacent small light sources 42 may be 0.5 mm or more (2 mm or more in one preferred embodiment) and 20 mm or less.

In this example, blue light sources are used as the small light sources 42. The blue light sources may emit light of x <0.24, y <0.18 in the CIE1931 color coordinates, for example. Note that white light sources may be used as the small light sources 42. The white light sources may be configured by an LED element having the peak wavelength in a blue region, an LED element having the peak wavelength in a green region, and an LED element having the peak wavelength in a red region, and may emit light of 0.24 < x < 0.42 and 0.18 < y < 0.48 in the CIE1931 color coordinates.

### [Color Conversion Sheet]

The color conversion sheet 44 is a wavelength conversion sheet for converting light emitted from the small light sources 42, which are blue light sources for example, into light having a wavelength of a certain color (e.g., green or red) as a peak wavelength. The color conversion sheet 44 converts, for example, blue light with a wavelength of 450 nm into green light with a wavelength of 540 nm and red light with a wavelength of 650 nm. In this case, when the small light source 42 emitting blue light with a wavelength of 450 nm is used, the color conversion sheet 44 partially converts blue light into green and red light, and thus the light transmitted through the color conversion sheet 44 becomes white light. For example, the color conversion sheet 44 may be a quantum dot (QD) sheet, a fluorescent sheet, or the like. Note that, when the small light sources 42 are white light sources, the color conversion sheet 44 may be unnecessary. The color conversion sheet 44, as long as between the small light sources 42 and the luminance enhancement sheet 47 described later, may be arranged above or below the combined light diffusion sheet 100 or between sheets constituting the combined light diffusion sheet 100.

### [Luminance Enhancement Sheet]

The luminance enhancement sheet 47 has a structure where a first prism sheet 45 and a second prism sheet 46 are layered in this order from the side closer to the small light sources 42. The first prism sheet 45 and the second prism sheet 46 are each, for example, a film having thereon a plurality of grooves each having an isosceles triangular transversal cross-section, where the apex angle of a prism between a pair of grooves adjacent to each other is approximately 90°. Here, the groove formed on the first prism sheet 45 and the groove formed on the second prism sheet 46 are arranged so as to be perpendicular to each other. The first prism sheet 45 and the second prism sheet 46 may be formed as one piece. The first prism sheet 45 and the second prism sheet 46 may be, for example, made of polyethylene terephthalate (PET) film with a prism shape formed by using UV-curable acrylic resin.

Although not shown, a polarizing sheet may be provided above the second prism sheet 46. The polarizing sheet improves the luminance of the display screen 50a by preventing light emitted from the backlight unit 40 from being absorbed by the first polarizing plate 6 of the liquid crystal display device 50.

In this example, a prism sheet is used as the luminance enhancement sheet 47. Alternatively, another optical sheet that increases the luminance of light emitted from the small light sources 42 may be used as the luminance enhancement sheet 47.

### <Combined Light Diffusion Sheet>

The combined light diffusion sheet 100 has a structure where three light diffusion layers 43 having the same structure are layered. The uppermost one of the light diffusion layers 43 that is most distant from the small light sources 42 is provided with a light reflection layer 101 configured to reflect visible light. There is no particular limitation in the type and the number of layers of the light diffusion layers 43 constituting the combined light diffusion sheet 100. For example, the combined light diffusion sheet 100 may have only one light diffusion layer 43 or may have a structure where two, four, or more light diffusion layers 43 are layered. The combined light diffusion sheet 100 may include a plurality of light diffusion layers 43 having different structures. Note that the light diffusion layer 43 constituting the combined light diffusion sheet 100 may be a "light diffusion sheet," or may be a plate-like "light diffusion plate" or a film-like "light diffusion film."

### [Light Diffusion Layer]

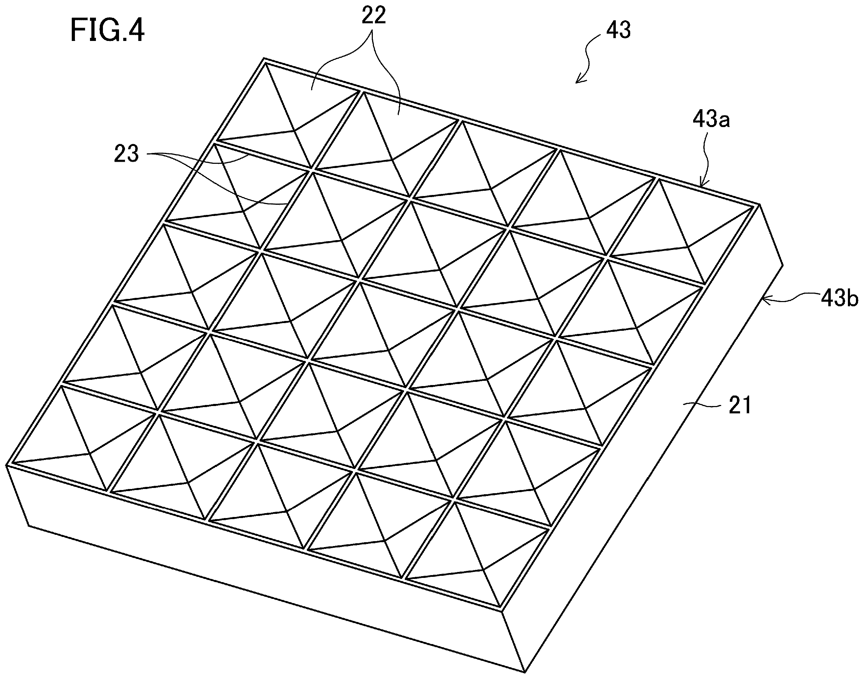

The light diffusion layer 43 has a base material layer 21. The light diffusion layer 43 includes a first surface 43a (a surface facing the small light sources 42) provided with a plurality of recesses 22. In this example, the plurality of recesses 22 are formed in a substantially inverted square pyramid shape. The recesses 22 adjacent to each other are parted by a ridge 23. The arrangement pitch of the array of recesses 22 is, for example, about 50 µm or more and about 500 µm or less. The angle formed by a wall surface of the recess 22 (an inclined surface of the substantially inverted polygon pyramid or the substantially inverted truncated polygon pyramid) and the sheet surface of the light diffusion layer 43 (an imaginary mirror surface without the recess 22) is, for example, 40 degrees or more and 65 degrees or fewer. In other words, the apex angle of the recess 22 is, for example, 50 degrees or more and 100 degrees or fewer. A second surface 43b of the light diffusion layer 43 may be a mirror surface, but may be a matte surface in order to improve the diffusivity. FIG. 4 illustrates that in the first surface 43 a of the light diffusion layer 43, substantially inverted square pyramid recesses 22 are arranged in a 5 x 5 matrix, but the actual number of recesses 22 in the array is much larger.

In the example shown in FIG. 2, a plurality of recesses 22 are formed in the first surface (the surface facing the small light sources 42) 43a of the light diffusion layer 43; however, instead, or in addition to this, a plurality of other recesses similar to the recesses 22 may be formed in the second surface 43b of the light diffusion layer 43.

The plurality of recesses 22 are formed in a substantially inverted polygon pyramid shape or a substantially inverted truncated polygon pyramid shape. The plurality of recesses 22 may be regularly two-dimensionally arranged. The "inverted (truncated) polygon pyramids" are (truncated) triangular pyramids, (truncated) quadrangular pyramids, or (truncated) hexagonal pyramids, which can be two-dimensionally arranged without a space therebetween in one preferred embodiment. The recesses 22 are formed by a manufacturing process such as extrusion molding or injection molding using a die (e.g., metal rolls). In view of the accuracy in cutting the surface of the die (or each metal roll), the "inverted (truncated) polygon pyramids" may be inverted (truncated) quadrangular pyramids.

Note that, considering difficulty in formation of a recess having a geometrically exact inverted polygon pyramid shape or inverted truncated polygon pyramid shape by an ordinary shape transfer technique, the terms "substantially inverted polygon pyramid" or "substantially inverted truncated polygon pyramid" are used. However, it is needless to say that these terms include shapes that can be regarded as a true or approximately inverted polygon pyramid or inverted truncated polygon pyramid. Here, "substantial(ly)" XX means that shapes can be approximated to the XX. For example, "substantially quadrangular pyramids" means shapes can be approximated to the quadrangular pyramids. Further, inevitable variations in the shape of the "inverted polygon pyramid" or the "inverted truncated polygon pyramid" attributed to processing accuracy of industrial production are also encompassed by the "substantially inverted polygon pyramid" or the "substantially inverted truncated polygon pyramid."

If a plurality of recesses 22 are regularly two-dimensionally arranged, the plurality of recesses 22 may be arranged without a space therebetween on the entire surface of the light diffusion layer 43, or may be arranged at regular intervals (i.e., a constant pitch). Some of the recesses 22 may be randomly arranged to the extent that the light diffusing effect is not lost.

The light diffusion layer 43 may be a base material layer 21 containing no diffusion agent, and may be, for example, a base material layer 21 made of a clear polycarbonate. When the base material layer 21 contains a diffusion agent, the material of the diffusion agent is not limited, and examples of the material may include silica, titanium oxide, aluminum hydroxide, and barium sulfate as inorganic particles; and acrylic, acrylonitrile, silicone, polystyrene, and polyamide as organic particles. The particle size of the diffusion agent may be, for example, 0.1 µm or more (preferably 1 µm or more) and 10 µm or less (preferably 8 µm or less) in view of the light diffusing effect.

Although the light diffusion layer 43 contains no diffusion agent in one preferred embodiment, the concentration of the diffusion agent may be, for example, 0.1% or more (preferably 0.3% or more) by mass and 10% or less (preferably 8% or less) by mass for 100% by mass of the material (i.e., the matrix) of the base material layer 21, in view of reflection and refraction effects by the substantially inverted polygon pyramid shape and the light diffusing effect by the diffusion agent. The difference in refractive index between the diffusion agent and the matrix of the base material layer 21 may be 0.01 or more, preferably 0.03 or more, more preferably 0.05 or more, further more preferably 0.1 or more, and most preferably 0.15 or more. A difference of less than 0.01 between the refractive index of the diffusion agent and that of the matrix of the base material layer 21 causes insufficient diffusion effects of the diffusion agent.

The resin to serve as the matrix of the base material layer 21 is not limited, as long as being a material that transmits light. Examples may include acrylic, polystyrene, polycarbonate, methyl methacrylate-styrene copolymer resin (MS resin), polyethylene terephthalate, polyethylene naphthalate, cellulose acetate, polyimide, and the like.

The thickness of the light diffusion layer 43 is not limited, but may be, for example, 50 µm or more and 1200 µm or less. The light diffusion layer 43 with a thickness larger than 1200 µm makes it difficult to achieve a reduction in the thickness of the liquid crystal display. On the other hand, the light diffusion layer 43 with a thickness smaller than 50 µm makes it difficult to achieve the effect of improvement in the luminance uniformity.

The light diffusion layer 43 may have a multilayered structure, e.g., two-layered structure with a base material layer as a first layer and a recess-formed layer as a second layer. In this case, the base material layer and the recess-formed layer may be formed as sheets independent of each other, and be layered to form the light diffusion layer 43. Alternatively, the base material layer and the recess-formed layer may be arranged separately to form the light diffusion layer 43. The recess-formed layer has a thickness larger than a maximum depth of the recesses 22. For example, when the recesses have a depth of 20 µm, the recess-formed layer has a thickness larger than 20 µm. The light diffusion layer 43 may have a structure of three or more layers including the base material layer and the recess-formed layer.

### [Method for Manufacturing Light Diffusion Layer]

The following describes a method of manufacturing the light diffusion layer 43, where the light diffusion layer 43 is formed as a sheet as an example. The method of manufacturing the light diffusion layer 43 is not limited. For example, extrusion molding, compression molding, injection molding, or the like may be employed. When the light diffusion layer 43 is extrusion-molded, a line speed may be set to, for example, 2 m/min or more and 30 m/min or less, and the compression line pressure may be set to, for example, 100 kgf/cm or more and 500 kgf/cm or less.

The procedure for producing a single-layer light diffusion sheet having unevenness on its surface by extrusion molding is as follows. First, plastic particles as pellets (a diffusion agent may be added) are introduced into a single-screw extruder. Then, the plastic particles are heated, molten, and kneaded. After that, a molten resin extruded from a T-die is sandwiched and cooled between two metal rolls, then transported by guide rolls. Then, the molten resin is cut off into sheet plates by a sheet cutter machine, or rolled up as a continuous sheet by a rolling machine and then cut off into sheet plates by a sheet cutter machine, thereby producing light diffusion sheets. Here, the molten resin is sandwiched between the metal rolls, one of which has a surface with an inverted shape of desired unevenness, which will be transferred onto the resin. This allows for shaping of diffusion sheets to have surfaces with the desired unevenness. However, the surface shapes of the rolls are not 100% transferred onto the resin and may thus be counted backwards from the degree of transfer to be designed.

If a two-layered light diffusion sheet with an uneven surface may be manufactured by extrusion molding, for example, plastic particles as pellets necessary for forming each layer are introduced into each of two single-screw extruders, the procedure above is then performed for each layer. Then, the fabricated sheets are layered.

Alternatively, the two-layered light diffusion sheet with an uneven surface may be manufactured as follows. First, plastic particles as pellets necessary for forming each layer are introduced into each of two single-screw extruders, and molten and kneaded by heating. Then, molten resin to become each layer is introduced into a single T-die, where layers of multiple molten resins are stacked, and the layers of the molten resins extruded through the T-die is then sandwiched and cooled between two metal rolls. After that, the layers of molten resins are transported by guide rolls and cut off into sheet plates using a sheet cutter machine, thereby yielding a double-layer diffusion sheet with an uneven surface.

Alternatively, the light diffusion sheet may be produced by shape-transfer using ultraviolet (UV) as follows. First, an uncured UV-curing resin is filled in a roll having an inverted shape of an uneven surface to be transferred, and a base material is pressed against the resin. Next, with the roll filled with UV-curing resin and the base material in one piece, the resin is cured by UV irradiation. Next, the sheet to which the shape of the uneven surface has been transferred by using the resin is released from the roll. Finally, the sheet is again irradiated with ultraviolet rays so that the resin is completely cured, thereby producing a light diffusion sheet having an uneven surface.

### [Light Reflection layer]

In the example shown in FIG. 2, the light reflection layer 101 configured to reflect visible light is provided on a second surface (light emission surface) 43b of the upper most light diffusion layer 43 that is most distant from the small light sources 42. That is, in this example, the light reflection layer 101 is provided on a base material which is the same as the upper most light diffusion layer 43 is provided. The second surface 43b of the light diffusion layer 43 may be a flat surface or a matte surface.

The average light reflectance of the light reflection layer 101 against visible light is 50% or more and 90% or less, preferably 60% or more and 90% or less, more preferably 70% or more and 85% or less, and particularly preferably 75% or more and 85% or less. The average light reflectance of 90% or less enables less reduction in the luminance, and the average light reflectance of 50% or more enables improvement in the luminance uniformity.

The light reflection layer 101 can be formed by, for example, printing an ink (e.g., a white ink) having light reflectivity on the second surface 43b of the light diffusion layer 43. In this case, the thickness of the light reflection layer 101 may be, for example, approximately 20 µm. The light reflectance is adjustable according to the type of ink, the type and composition of the reflective agent added to the ink, the thickness of the ink printed, and the like. The light reflection layer 101 may be formed as an inorganic reflection layer, for example, a metal oxide layer or the like, having a multilayered structure.

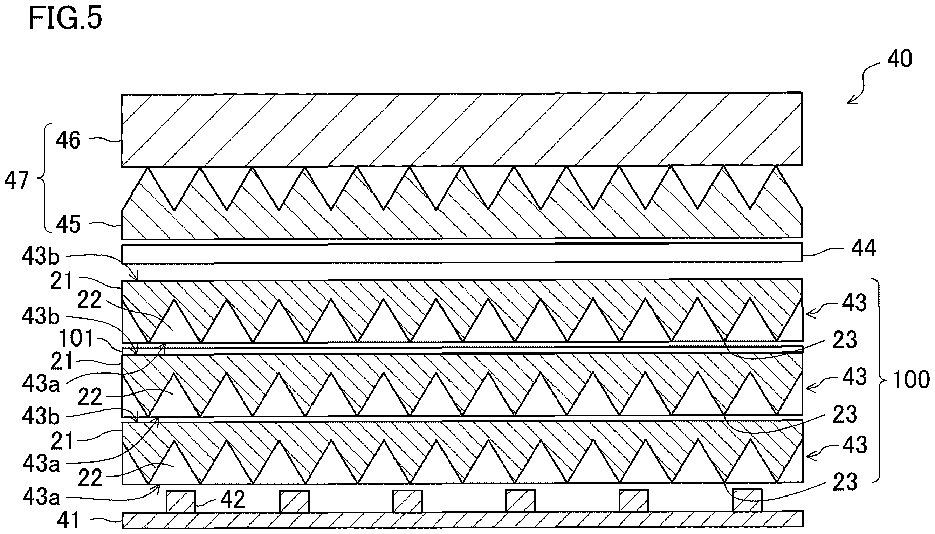

In this example shown in FIG. 2, the light reflection layer 101 is provided on the second surface 43b of the light diffusion layer 43 located at the uppermost layer (the third layer). However, instead, as shown in FIG. 5, the light reflection layer 101 may be provided on the second surface 43b of the light diffusion layer 43 located at the second layer. Alternatively, although not shown, the light reflection layer 101 may be provided on the second surface 43b of the light diffusion layer 43 located at the lowermost layer (the first layer).

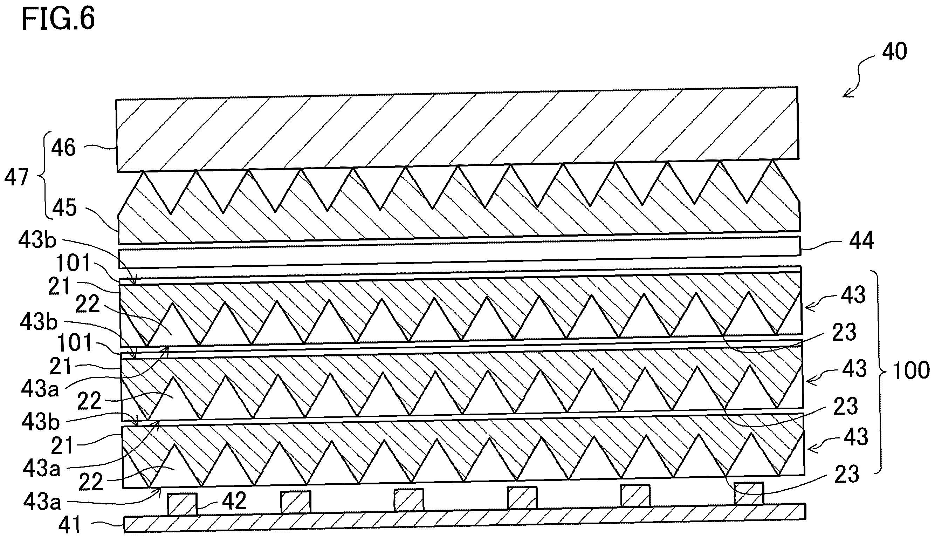

In this example shown in FIG. 2, only one light reflection layer 101 is provided in the combined light diffusion sheet 100. However, instead, as shown in FIG. 6, two light reflection layers 101 may be provided on the second surfaces 43b of the light diffusion layers 43 located at the second and third layers. Alternatively, although not shown, two light reflection layer 101 may be provided on the second surfaces 43b of the light diffusion layers 43 located at the first and third layers or the light diffusion layers 43 located at the first and second layers. Alternatively, three light reflection layers 101 may be provided on the second surfaces 43b of the light diffusion layers 43 located at the first to third layers.

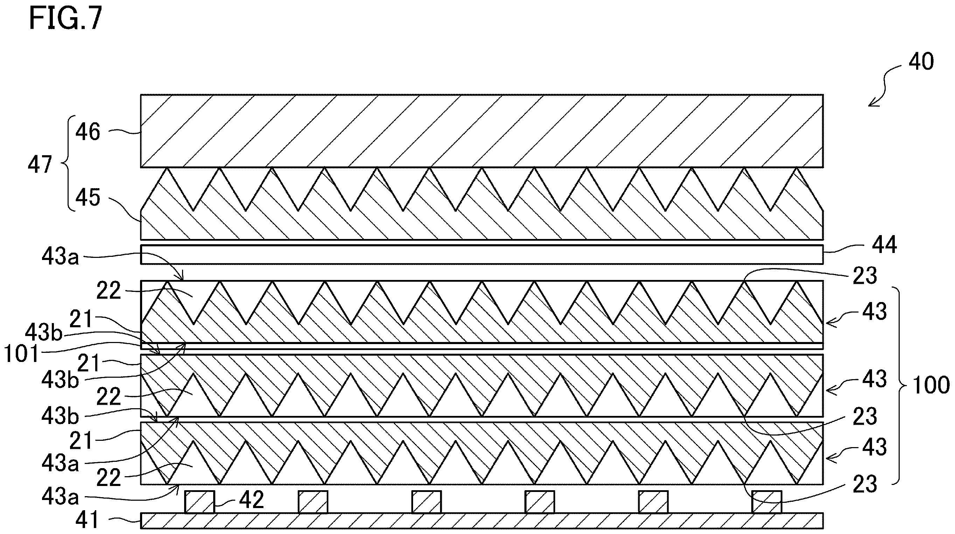

In the examples shown in FIG. 2, FIG. 5, and FIG. 6, in the light diffusion layer 43, the first surface 43a as a light incident surface is provided with the recesses 22, and the second surface 43b as a light emission surface is provided with the light reflection layer 101. However, instead, in at least one light diffusion layer 43, the light emission surface may be provided with the recesses 22, and the light incident surface may be provided with the light reflection layer 101. For example, as shown in FIG. 7, in the light diffusion layer 43 located at the uppermost layer, the first surface 43a as a light emission surface may be provided with the recesses 22, and the second surface 43b as a light incident surface may be provided with the light reflection layer 101.

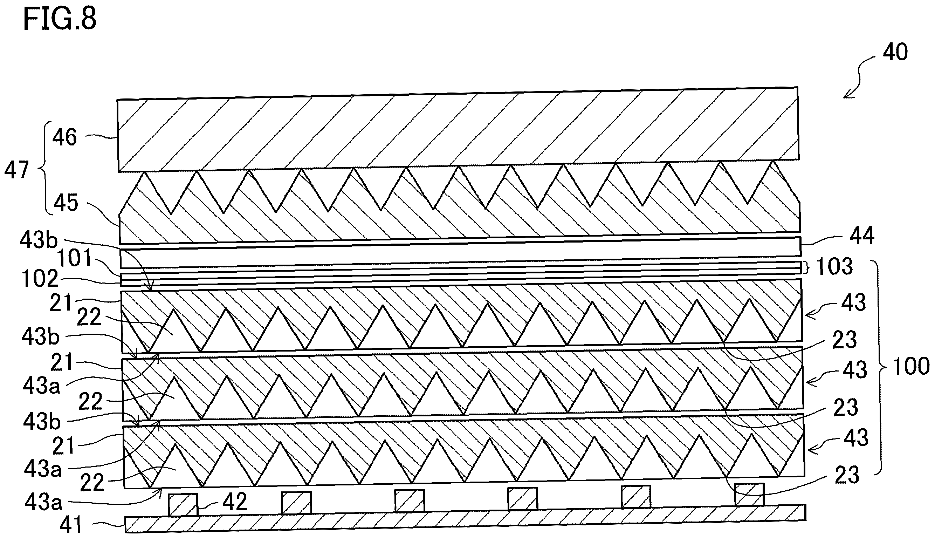

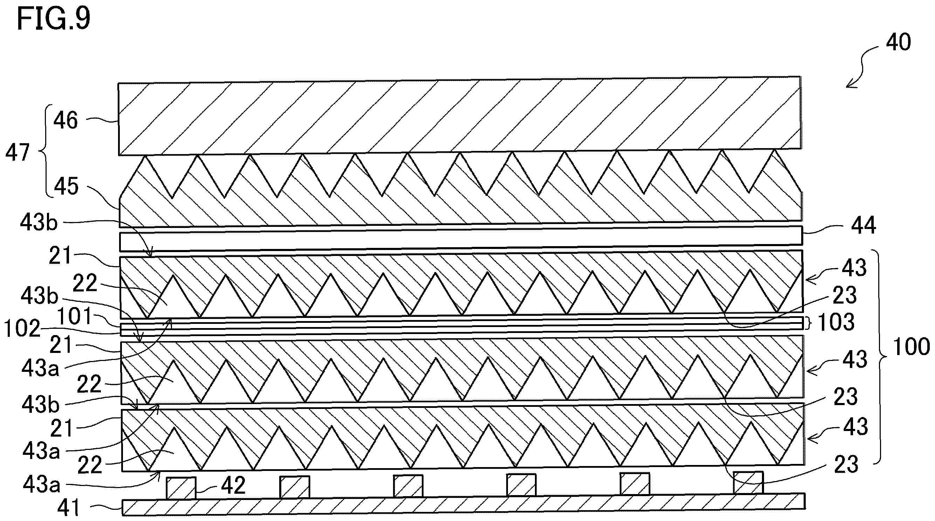

In the examples shown in FIG. 2, FIG. 5 to FIG. 7, the light reflection layer 101 is provided on a base material which is the same as the light diffusion layer 43 is provided. However, instead, as shown in FIG. 8, the light reflection layer 101 may be provided on a base material which is different from the light diffusion layer 43 is provided. For example, a light reflection sheet 103 having a light reflection layer 101 provided on a base material layer 102 may be arranged between the light diffusion layer 43 located at the uppermost layer and the luminance enhancement sheet 47 (first prism sheet 45). For example, the structure shown in FIG. 8 is adoptable as an alternative structure when an uneven surface is provided on both surfaces of the light diffusion layer 43 such that it is difficult to arrange the light reflection layer 101 on the light diffusion layer 43 due to the printed ink or the like. Note that in the example shown in FIG. 8, the light reflection sheet 103 having the light reflection layer 101 is arranged between the light diffusion layer 43 located at the third layer and the luminance enhancement sheet 47. However, instead, as shown in FIG. 9, the light reflection sheet 103 having the light reflection layer 101 may be arranged between the light diffusion layers 43 located at the third and second layers. Alternatively, the light reflection sheet 103 having the light reflection layer 101 may be arranged between the light diffusion layers 43 located at the second and first layers. When the light reflection sheet 103 is arranged between light diffusion layers 43, the light diffusion layer 43 above the light reflection sheet 103 may be arranged so that the first surface 43a provided with the recesses 22 serves as a light emission surface. The light reflection sheet 103 may include a plurality of light reflection sheets 103 between the light diffusion layer 43 and the luminance enhancement sheet 47 or between the light diffusion layers 43.

In the examples shown in FIG. 2, FIG. 5 to FIG. 9, the three light diffusion layers 43 are provided. However, instead, one, two, four or more light diffusion layer(s) 43 may be provided where the light reflection layer 101 is provided on any of the light diffusion layer(s) 43. Alternatively, the light reflection sheet 103 may be provided in any position between the light diffusion layer 43 located at the first layer and the luminance enhancement sheet 47.

### <Advantages of Embodiment>

As described above, the combined light diffusion sheet 100 of the present embodiment includes a light reflection layer 101 configured to reflect visible light and a light diffusion layer 43, and the average light reflectance of the light reflection layer 101 against visible light is 50% or more and 90% or less. The light reflection layer 101 may be provided on a base material which is the same as the light diffusion layer 43 is provided, or may be provided on a base material which is different from the light diffusion layer 43 is provided.

The combined light diffusion sheet 100 of the present embodiment includes the light reflection layer 101 configured to reflect visible light. Thus, light from the small light sources 42 is reflected multiple times, thereby achieving greater improvement in the luminance uniformity than when the light reflection layer 101 is not provided.

In the combined light diffusion sheet 100 of the present embodiment, the light diffusion layer 43 may include a first surface 43a provided with a plurality of recesses 22 in a substantially inverted polygon pyramid shape or a substantially inverted truncated polygon pyramid shape, and a second surface 43b as a flat surface or a matte surface, and the light reflection layer 101 may be provided on the second surface 43b. Accordingly, the light reflection layer can be easily provided on the second surface of the light diffusion layer by, for example, printing an ink.

In the combined light diffusion sheet 100 of the present embodiment, the average light reflectance of the light reflection layer 101 against visible light may be 60% or more and 90% or less. This enables further improvement in the luminance uniformity.

In the combined light diffusion sheet 100 of the present embodiment, two or more light diffusion layers 43 may be provided. This enables further improvement in the luminance uniformity.

In the combined light diffusion sheet 100 of the present embodiment, two or more light reflection layers 101 may be provided. This enables further improvement in the luminance uniformity.

In the combined light diffusion sheet 100 of the present embodiment, the thickness of the light diffusion layer 43 may be 50 µm or more and 1200 µm or less. This enables reduction in the thickness of the liquid crystal display 50 with achievement in the light diffusing effect by the light diffusion layer 43.

The backlight unit 40 of the present embodiment is built in the liquid crystal display device 50 so as to lead light emitted from the plurality of small light sources 42 toward the display screen 50a via the luminance enhancement sheet 47 that increases the luminance of the light. The backlight unit 40 of the present embodiment includes the combined light diffusion sheet 100 of the present embodiment between the luminance enhancement sheet 47 and the plurality of small light sources 42.

The backlight unit 40 of the present embodiment includes the combined light diffusion sheet 100 of the present embodiment, and thus the luminance uniformity is improved.

The backlight unit 40 of the present embodiment may further include a color conversion sheet 44 configured to convert the wavelength of light emitted from the small light sources 42, between the luminance enhancement sheet 47 and the small light sources 42. Accordingly, the backlight unit 40 can be structured even when light sources other than white light sources are adopted as the small light sources 42.

In the backlight unit 40 of the present embodiment, the plurality of small light sources 42 may be arranged on a reflective sheet 41 provided opposite to the display screen 50a when viewed from the combined light diffusion sheet 100. Accordingly, multiple reflections of light between the reflective sheet 41 and the combined light diffusion sheet 100 further improve the luminance uniformity.

In the backlight unit 40 of the present embodiment, the combined light diffusion sheet 100 may include a plurality of light diffusion layers 43, and the light reflection layer 101 may be provided closer to the luminance enhancement sheet 47 than a light diffusion layer 43 which is one of the plurality of light diffusion layers 43 and which is closest to the small light sources 42. Accordingly, the light reflection layer 101 can provide sufficient effect of improvement in the luminance uniformity. In this case, when three or more light diffusion layers 43 are provided, and the light reflection layer 101 is provided closer to the luminance enhancement sheet 47 than a light diffusion layer 43 which is one of the plurality of light diffusion layers 43 and which is second closest to the small light sources 42, the light reflection layer 101 provides greater effect of improvement in the luminance uniformity. In particular, when the light reflection layer 101 is provided closer to the luminance enhancement sheet 47 than a light diffusion layer 43 which is one of the plurality of light diffusion layers 43 and which is most distant from the small light sources 42, the light reflection layer 101 can provide still greater effect of improvement in the luminance uniformity.

In the backlight unit 40 of the present embodiment, the combined light diffusion sheet 100 may include a plurality of light diffusion layers 43, and the light reflection layer 101 may be provided on the light incident surface of a light diffusion layer 43 which is one of the plurality of light diffusion layers 43 and which is most distant from the small light sources 42. Accordingly, the light reflection layer 101 can exhibit more significant effect of improvement in the luminance uniformity.

In the backlight unit 40 of the present embodiment, the combined light diffusion sheet 100 may include the light diffusion layer 43 including a plurality of light diffusion layers 43 provided on a base material which is different from the light reflection layer 101 is provided, and the light reflection layer 101 may be provided between a light diffusion layer 43 which is one of the plurality of light diffusion layers 43 and which is most distant from the small light sources 42 and a light diffusion layer 43 which is another one of the plurality of light diffusion layers 43 and which is second distant from the small light sources 42. Accordingly, the light reflection layer 101 can exhibit more significant effect of improvement in the luminance uniformity.

The liquid crystal display device 50 of the present embodiment includes the backlight unit 40 of the present embodiment and the liquid crystal display panel 5.

The liquid crystal display device 50 of the present embodiment and an information equipment including the liquid crystal display device 50 include the backlight unit 40 of the present embodiment, and thus the luminance uniformity is improved.

### (Examples)

Examples and Reference Examples will be described below in comparison with Comparative Examples.

### <Measurement of Average Light Reflectance>

For the optical properties of the light diffusion layers 43 and the light reflection layer 101 of the later-described Examples, Reference Examples, and Comparative Examples, the average light reflectance in the visible light region, specifically in the wavelength range of 400 nm to 700 nm, was measured as follows.

A test piece having a size of approximately 50 mm x 50 mm was prepared for measurement. As will be described later, a light diffusion layer 43 on which the light reflection layer 101 was printed, a light diffusion layer 43 on which nothing was printed, and a light reflection sheet 103 having a biaxially stretched polyethylene terephthalate film (PET film) as a base material layer 102 on which the light reflection layer 101 was printed were prepared.

As a measurement device, V-670 manufactured by JASCO corporation was used, and light reflectance was measured for a wavelength of every 2 nm within a wavelength range of 400 nm to 700 nm, and the average value thereof was defined as the average light reflectance of the test piece (sample). Note that for the light diffusion layer 43 on which the light reflection layer 101 was printed, the average light reflectance against the light incident on the printed surface (second surface 43b) was measured. For the light diffusion layer 43 on which nothing was printed, the average light reflectance against the light incident on the second surface 43b (the surface opposite to the first surface 43a provided with the recesses 22 each having an inverted square pyramid shape) was measured. For the light reflection sheet 103 having the base material layer 102 on which the light reflection layer 101 was printed, the average light reflectance against the light incident on the printed surface was measured.

### <Measurement of Luminance and Luminance Uniformity>

For each of the later-described Examples, Reference Examples, and Comparative Examples, the luminance and the luminance uniformity were measured using an LED array having small light sources 42 configured similar to the above backlight unit 40 (see, for example, FIG. 2, FIG. 5 to FIG. 9) and arranged as shown in FIG. 3. That is, the luminance and the luminance uniformity were measured with the light diffusion sheet 43, the color conversion sheet 44, and the luminance enhancement film 47 disposed above the small light sources (LED) 42 arranged in an array.

Specifically, the light diffusion layer 43 located at the lowermost layer (the first layer) provided with the recesses 22 having an inverted square pyramid shape was placed on the LED array including the small light sources 42 so that the first surface 43a provided with the recesses 22 was in contact with the upper surface of the LED array. The light diffusion layer 43 located at the second layer was placed on the light diffusion layer 43 located at the first layer so that the first surface 43a provided with the recesses 22 faced the small light sources 42. Further, the light diffusion layer 43 located at the third layer was placed on the light diffusion layer 43 located at the second layer so that the first surface 43a provided with the recesses 22 or the second surface 43b faced the small light sources 42. On the three light diffusion layers 43 layered as described above, the luminance enhancement sheet 47 (a pair of prism sheets 45 and 46) was stacked with the color conversion sheet 44 between the three light diffusion layers 43 and the luminance enhancement sheet 47 (a pair of prism sheets 45 and 46) so that the ridges of the prism sheets 45 and 46 were perpendicular to each other. Then, the luminance and the luminance uniformity were measured. Note that as an LED array, an array of blue LEDs (product number: XPGDRY-L1-0000-00501) manufactured by Cree, Inc., arranged with a pitch of 12.5 mm, and serving as the small light sources 42 were used.

In the measurement of the luminance uniformity, first, an LED array (6 x 6) as shown in FIG. 3 was used to measure two-dimensional luminance distribution of the uppermost luminance enhancement film surface in the film structure of the backlight unit as described above. Then, the average value and the standard deviation were calculated for the luminance of all 22500 pixels (150 pixels x 150 pixels with a pixel pitch of 0.25 mm) within an area of three longitudinal x three latitudinal LEDs of the LED array.

Then, the luminance uniformity was calculated according to the following formula: luminance uniformity = (average value of luminance (cd/m2))/(standard deviation of luminance (cd/m2)). The higher the value of the luminance uniformity thus obtained is, the more uniform the luminance is.

### <Examples 1 to 17, Reference Examples 1 and 2, and Comparative Examples 1 to 4>

A method for manufacturing a resin sheet to become light diffusion layers 43 used in Examples 1 to 17, Reference Examples 1 and 2, and Comparative Examples 1 to 4 is as follows.

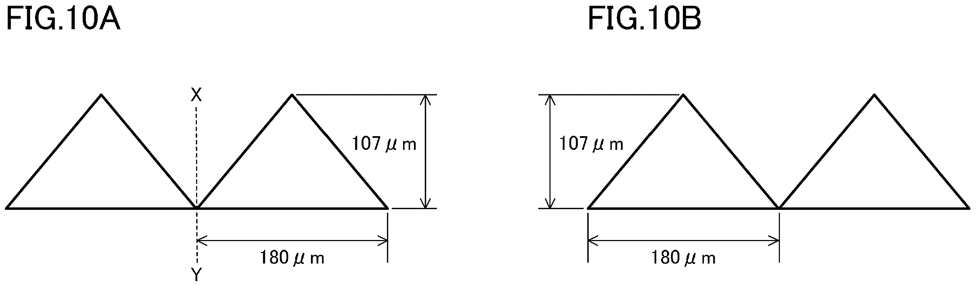

First, an aromatic polycarbonate resin having a melt mass flow rate of 15 g/10 min measured in compliance with ISO1133 was input to an extruder, and then molten and kneaded resin was extruded from a T-die. Then, two metal rolls, one of which was a roll having a surface shape (a square pyramid shape with a height of 107 µm, a pitch of 180 µm, and an apex angle of 80 degrees) shown in FIGS. 10A and 10B (FIG. 10B is a diagram showing a shape viewed from a cross-sectional direction along the line X-Y of FIG. 10A), and the other one of which was a roll having a random matte shape (surface roughness Ra = 2.5 µm), were used, so that the molten resin extruded from the T-die was sandwiched between the two rolls and then cooled with application of the shape transfer. Accordingly, a light diffusion layer 43 (resin sheet) constituted by a single base material layer 21 having a thickness of 650 µm was manufactured by extrusion molding, where the light diffusion layer 43 has surfaces, one of which is a surface (first surface 43a) having a recessed (inverted) pyramid shape having a depth of 87 µm which depends on the height of the square pyramids on the roll, and the other one (second surface 43b) of which is a matte surface with a surface roughness Ra = 0.5 µm.

Next, in Examples 1 to 7, Reference Examples 1 and 2, and Comparative Examples 1 to 3, UV-curable inks (Ray-Cure 6100 Series, SL6107 high concentration white; and Ray-Cure 6100 Series, SL6100 medium manufactured by Jujo Chemical Co., Ltd.) were used. The ratio of the inks was adjusted to a target value of the average light reflectance (%), and then according to a screen printing method, a light reflection layer 101 was formed by solid printing of a white ink on the entire matte surface (second surface 43b) of the light diffusion layer 43 produced as described above. In Examples 8 to 10, heat-curable inks (two pack type insert-molding inks XIP-HF679 White and XIP-HF001 Victoria manufactured by Teikoku Printing Inks Mfg. Co., Ltd.) were used. The ratio of the white ink and the transparent ink was adjusted to a target value of the average light reflectance (%), and then a light reflection layer 101 was formed by solid printing of a white ink on the entire matte surface (second surface 43b) of the light diffusion layer 43 produced as described above.

Specifically, in Examples 1 to 3, the light reflection layer 101 having an average light reflectance of approximately 68% was printed on the matte surface (second surface 43b) of the light diffusion layer 43. In Example 1, the light reflection layer 101 was printed on the light diffusion layer 43 located at the first layer (the lowermost layer), and nothing was printed on the other light diffusion layers 43. In Example 2, the light reflection layer 101 was printed on the light diffusion layer 43 located at the second layer, and nothing was printed on the other light diffusion layers 43. In Example 3, the light reflection layer 101 was printed on the light diffusion layer 43 located at the third layer (the uppermost layer), and nothing was printed on the other light diffusion layers 43. The results of the above measurement of the luminance and the luminance uniformity of Examples 1 to 3 are shown in Table 1 together with the average light reflectance (the average light reflectance of the light diffusion layer 43 alone on which the light reflection layer 101 is formed by solid printing of a white ink).

**[Table 1]**

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Average Light Reflectance (%) | 68.0 | 68.0 | 68.0 | 73.8 | 73.8 | 73.8 | 52.8 | 81.9 | 81.9 | 81.9 | 80.0 |
| Luminance Uniformity | 18.1 | 21.2 | 22.1 | 18.3 | 21.5 | 22.5 | 19.9 | 24.1 | 28.0 | 28.4 | 22.4 |
| Luminance (Cd/m²) | 14,900 | 15,100 | 15,200 | 14,000 | 13,900 | 13,900 | 17,000 | 13,500 | 13,300 | 13,200 | 14,000 |

In Examples 4 to 6, the light reflection layer 101 having an average light reflectance of approximately 74% was printed on the matte surface (second surface 43b) of the light diffusion layer 43. In Example 4, the light reflection layer 101 was printed on the light diffusion layer 43 located at the first layer (the lowermost layer), and nothing was printed on the other light diffusion layers 43. In Example 5, the light reflection layer 101 was printed on the light diffusion layer 43 located at the second layer, and nothing was printed on the other light diffusion layers 43. In Example 6, the light reflection layer 101 was printed on the light diffusion layer 43 located at the third layer (the uppermost layer), and nothing was printed on the other light diffusion layers 43. The results of the above measurement of the luminance and the luminance uniformity of Examples 4 to 6 are shown in Table 1 together with the average light reflectance (the average light reflectance of the light diffusion layer 43 alone on which the light reflection layer 101 is formed by solid printing of a white ink).

In Reference Examples 1 and 2 and Example 7, the light reflection layer 101 having an average light reflectance of approximately 53% was printed on the matte surface (second surface 43b) of the light diffusion layer 43. In Reference Example 1, the light reflection layer 101 was printed on the light diffusion layer 43 located at the first layer (the lowermost layer), and nothing was printed on the other light diffusion layers 43. In Reference example 2, the light reflection layer 101 was printed on the light diffusion layer 43 located at the second layer, and nothing was printed on the other light diffusion layers 43. In Example 7, the light reflection layer 101 was printed on the light diffusion layer 43 located at the third layer (the uppermost layer), and nothing was printed on the other light diffusion layers 43. The results of the above measurement of the luminance and the luminance uniformity of Reference Examples 1 and 2 are shown in Table 2 together with the average light reflectance (the average light reflectance of the light diffusion layer 43 alone on which the light reflection layer 101 is formed by solid printing of a white ink). The results of the above measurement of the luminance and the luminance uniformity of Example 7 are shown in Table 1 together with the average light reflectance (the average light reflectance of the light diffusion layer 43 alone on which the light reflection layer 101 is formed by solid printing of a white ink).

**[Table 2]**

| | Reference Example 1 | Reference Example 2 | Comparative Example 1 | Comparative Example 2 | Comparative Example 3 | Comparative Example 4 |
|---|---|---|---|---|---|---|
| Average Light Reflectance (%) | 52.8 | 52.8 | 39.2 | 39.2 | 39.2 | 35.8 |
| Luminance Uniformity | 12.2 | 15.4 | 10.8 | 13.8 | 17.6 | 17.9 |
| Luminance (Cd/m²) | 17,000 | 16,900 | 18,300 | 18,300 | 18,400 | 14,100 |

In Examples 8 to 10, the light reflection layer 101 having an average light reflectance of approximately 82% was printed on the matte surface (second surface 43b) of the light diffusion layer 43. In Example 8, the light reflection layer 101 was printed on the light diffusion layer 43 located at the first layer (the lowermost layer), and nothing was printed on the other light diffusion layers 43. In Example 9, the light reflection layer 101 was printed on the light diffusion layer 43 located at the second layer, and nothing was printed on the other light diffusion layers 43. In Example 10, the light reflection layer 101 was printed on the light diffusion layer 43 located at the third layer (the uppermost layer), and nothing was printed on the other light diffusion layers 43. The results of the above measurement of the luminance and the luminance uniformity of Examples 8 to 10 are shown in Table 1 together with the average light reflectance (the average light reflectance of the light diffusion layer 43 alone on which the light reflection layer 101 is formed by solid printing of a white ink).

In Comparative Examples 1 to 3, the light reflection layer 101 having an average light reflectance of approximately 40% was printed on the matte surface (second surface 43b) of the light diffusion layer 43. In Comparative Example 1, the light reflection layer 101 was printed on the light diffusion layer 43 located at the first layer (the lowermost layer), and nothing was printed on the other light diffusion layers 43. In Comparative example 2, the light reflection layer 101 was printed on the light diffusion layer 43 located at the second layer, and nothing was printed on the other light diffusion layers 43. In Comparative example 3, the light reflection layer 101 was printed on the light diffusion layer 43 located at the third layer (the uppermost layer), and nothing was printed on the other light diffusion layers 43. The results of the above measurement of the luminance and the luminance uniformity of Comparative Examples 1 to 3 are shown in Table 2 together with the average light reflectance (the average light reflectance of the light diffusion layer 43 alone on which the light reflection layer 101 is formed by solid printing of a white ink).

In Comparative Example 4, the light diffusion layer 43 on which the light reflection layer 101 was printed was not used, and three light diffusion layers 43 on which nothing was printed were layered. The results of the above measurement of the luminance and the luminance uniformity of Comparative Example 4 are shown in Table 2 together with the average light reflectance. Note that the average light reflectance of Comparative Example 4 is the average light reflectance of the light incident on the second surface 43b (matte surface) that is a surface opposite to the first surface 43a provided with recesses 22 having an inverted square pyramid shape in the single light diffusion layer 43.

In Example 11, as a base material layer 102 which is different from the light diffusion layer 43 is provided, a biaxially stretched polyethylene terephthalate film (trade name: COSMOSHINE) having a thickness of 38 µm manufactured by TOYOBO Co., Ltd. was used. A light reflection layer 101 was formed by solid printing of a white ink, which was the same ink as used in Examples 1 to 7, on the entirety of one of the surfaces of the above film so that the average light reflectance was 80%. In this manner, the light reflection sheet 103 was obtained. The luminance and the luminance uniformity were measured in the following state: the light reflection sheet 103 was arranged between a structure where three light diffusion layers 43 on which nothing was printed were layered (the structure used in Comparative Example 4) and the color conversion sheet 44 so that the printed surface of the light reflection sheet 103 faces the color conversion sheet 44 (see FIG. 8). The results of the above measurement of the luminance and the luminance uniformity of Example 11 are shown in Table 1 together with the average light reflectance of the light reflection sheet 103 alone formed by solid printing of a white ink.

In Examples 12 and 13, similarly to Examples 1 to 7, UV-curable inks (Ray-Cure 6100 Series, SL6107 high concentration white; and Ray-Cure 6100 Series, SL6100 medium manufactured by Jujo Chemical Co., Ltd.) were used. The ratio of the inks was adjusted to a target value of the average light reflectance (%), and then according to a screen printing method, a light reflection layer 101 was formed by solid printing of a white ink on the entire matte surface (second surface 43b) of the light diffusion layer 43 produced as described above. Specifically, in Example 12, the light diffusion layer 43 located at the third layer (the uppermost layer) was arranged so that the first surface 43a provided with the recesses 22 served as a light emission surface; the light reflection layer 101 having an average light reflectance of approximately 53% was printed on the matte surface (the second surface 43b as a light incident surface) of the light diffusion layer 43 located at the third layer; and nothing was printed on the other light diffusion layers 43. In Example 13, the light diffusion layer 43 located at the third layer (the uppermost layer) was arranged so that the first surface 43a provided with the recesses 22 served as a light emission surface; the light reflection layer 101 having an average light reflectance of approximately 74% was printed on the matte surface (the second surface 43b as a light incident surface) of the light diffusion layer 43 located at the third layer; and nothing was printed on the other light diffusion layers 43. The results of the above measurement of the luminance and the luminance uniformity of Examples 12 and 13 are shown in Table 3 together with the average light reflectance (the average light reflectance of the light diffusion layer 43 alone on which the light reflection layer 101 is formed by solid printing of a white ink).

**[Table 3]**

| | Example 12 | Example 13 | Example 14 | Example 15 | Example 16 | Example 17 |
|---|---|---|---|---|---|---|
| Average Light Reflectance (%) | 52.8 | 73.8 | 81.9 | 80.0 | 80.0 | 80.0 |
| Luminance Uniformity | 24.5 | 30.7 | 41.8 | 25.8 | 35.4 | 40.3 |
| Luminance (Cd/m²) | 16,800 | 13,900 | 13,000 | 13,000 | 11,900 | 11,800 |

In Example 14, similarly to Examples 8 to 10, heat-curable inks (two pack type insert-molding inks XIP-HF679 White and XIP-HF001 Victoria manufactured by Teikoku Printing Inks Mfg. Co., Ltd.) were used. The ratio of the white ink and the transparent ink was adjusted to a target value of the average light reflectance (%), and then a light reflection layer 101 was formed by solid printing of a white ink on the entire matte surface (second surface 43b) of the light diffusion layer 43 produced as described above. Specifically, in Example 14, the light diffusion layer 43 located at the third layer (the uppermost layer) was arranged so that the first surface 43a provided with the recesses 22 served as a light emission surface; the light reflection layer 101 having an average light reflectance of approximately 82% was printed on the matte surface (the second surface 43b as a light incident surface) of the light diffusion layer 43 located at the third layer; and nothing was printed on the other light diffusion layers 43. The results of the above measurement of the luminance and the luminance uniformity of Example 14 are shown in Table 3 together with the average light reflectance (the average light reflectance of the light diffusion layer 43 alone on which the light reflection layer 101 is formed by solid printing of a white ink).

In Example 15, similarly to Example 11, as a base material layer 102 which is different from the light diffusion layer 43 is provided, a biaxially stretched polyethylene terephthalate film (trade name: COSMOSHINE) having a thickness of 38 µm manufactured by TOYOBO Co., Ltd. was used. A light reflection layer 101 was formed by solid printing of a white ink, which was the same ink as used in Examples 1 to 7, on the entirety of one of the surfaces of the above film so that the average light reflectance was 80%. In this manner, the light reflection sheet 103 was obtained. The luminance and the luminance uniformity were measured in the following state: in a structure where three light diffusion layers 43 on which nothing was printed were layered (the structure used in Comparative Example 4), the light diffusion layer 43 located at the third layer (the uppermost layer) was arranged so that the first surface 43a provided with the recesses 22 served as a light emission surface; and the light reflection sheet 103 was arranged between the light diffusion layers 43 located at the second and third layers so that the printed surface of the light reflection sheet 103 faces the light diffusion layer 43 located at the third layer. The results of the above measurement of the luminance and the luminance uniformity of Example 15 are shown in Table 3 together with the average light reflectance of the light reflection sheet 103 alone formed by solid printing of a white ink.

In Example 16, as a base material layer 102 which is different from the light diffusion layer 43 is provided, a biaxially stretched polyethylene terephthalate film (trade name: COSMOSHINE) having a thickness of 125 µm manufactured by TOYOBO Co., Ltd. was used. A light reflection layer 101 was formed by solid printing of a white ink, which was the same ink as used in Examples 1 to 7, on the entirety of one of the surfaces of the above film so that the average light reflectance was 80%. In this manner, the light reflection sheet 103 was obtained. Similarly to Example 11, the luminance and the luminance uniformity were measured in the following state: the light reflection sheet 103 was arranged between a structure where three light diffusion layers 43 on which nothing was printed were layered (the structure used in Comparative Example 4) and the color conversion sheet 44 so that the printed surface of the light reflection sheet 103 faces the color conversion sheet 44 (see FIG. 8). The results of the above measurement of the luminance and the luminance uniformity of Example 16 are shown in Table 3 together with the average light reflectance of the light reflection sheet 103 alone formed by solid printing of a white ink.

In Example 17, similarly to Example 16, as a base material layer 102 which is different from the light diffusion layer 43 is provided, a biaxially stretched polyethylene terephthalate film (trade name: COSMOSHINE) having a thickness of 125 µm manufactured by TOYOBO Co., Ltd. was used. A light reflection layer 101 was formed by solid printing of a white ink, which was the same ink as used in Examples 1 to 7, on the entirety of one of the surfaces of the above film so that the average light reflectance was 80%. In this manner, the light reflection sheet 103 was obtained. Similarly to Example 15, the luminance and the luminance uniformity were measured in the following state: in a structure where three light diffusion layers 43 on which nothing was printed were layered (the structure used in Comparative Example 4), the light diffusion layer 43 located at the third layer (the uppermost layer) was arranged so that the first surface 43a provided with the recesses 22 served as a light emission surface; and the light reflection sheet 103 was arranged between the light diffusion layers 43 located at the second and third layers so that the printed surface of the light reflection sheet 103 faces the light diffusion layer 43 located at the third layer. The results of the above measurement of the luminance and the luminance uniformity of Example 17 are shown in Table 3 together with the average light reflectance of the light reflection sheet 103 alone formed by solid printing of a white ink.

### <Evaluation of Examples 1 to 17, Reference Examples 1 and 2, and Comparative Examples 1 to 4>

As shown in Table 1 to Table 3, it can be found that the luminance uniformity in Examples 1 to 17 was more improved than that in Comparative Example 4 where only the light diffusion layers 43 on which the light reflection layer 101 was not formed were used, and that a combined light diffusion sheet 100 with favorable luminance uniformity was obtained. Even when the light reflection layer 101 had an average light reflectance of more than 80%, the decrease in the luminance was smaller than that in Comparative Example 4 where the light reflection layer 101 was not used.

As shown in Table 1 and Table 2, it can be found from comparison of Examples 2 and 3 with Example 1, comparison of Examples 5 and 6 with Example 4, comparison of Example 7 with Reference Examples 1 and 2, and comparison of Examples 9 and 10 with Example 8 that the luminance uniformity is more significantly improved when the light reflection layer 101 is provided on the light diffusion layer 43 located at the second or third layer than when the light reflection layer 101 is provided on the light diffusion layer 43 located at the first layer, and that in particular it is preferable to provide the light reflection layer 101 on the light diffusion layer 43 located at the third layer.

As shown in Table 1 and Table 3, it can be found from comparison of Example 7 with Example 12, comparison of Example 6 with Example 13, comparison of Example 10 with Example 14 that the light reflection layer 101 provided on the light incident surface of the light diffusion layer 43 located at the third layer can provide significant effect of improvement in the luminance uniformity.

As shown in Table 1 and Table 3, it can be found from comparison of Example 11 with Example 15 and comparison of Example 16 with Example 17 that when the light diffusion layer 43 located at the third layer is arranged so that the first surface 43a provided with the recesses 22 serves as a light emission surface, and the light reflection sheet 103 provided with the light reflection layer 101 is arranged between the light diffusion layers 43 located at the second and third layers, the light reflection layer 101 can provide more significant effect of improvement in the luminance uniformity. It also can be found from comparison of Example 11 with Example 16 and comparison of Example 15 with Example 17 that when the base material layer 102 of the light reflection sheet 103 is thicker, the luminance slightly decreases but the luminance uniformity is further improved.

### (Other Embodiments)

The above describes embodiments (including modifications and examples; the same applies hereinafter) of the present disclosure. However, the present disclosure is not limited only to the aforementioned embodiments, and various modifications are possible within the scope of the disclosure. That is, the above description of the embodiments is solely to serve as an example in nature, and is not intended to limit the present disclosure, applications thereof, or uses thereof. For example, it is needless to say that the configuration of the combined light diffusion sheet (layer structures, material, and the like) is not limited to that of the combined light diffusion sheet 100 of the above embodiment. It is also needless to say that the configurations of the backlight unit to which the above combined light diffusion sheet is applied and the liquid crystal display device having the above backlight unit are also not limited to the configurations of the backlight unit 40 and the liquid crystal display device 50 of the above embodiment.

### DESCRIPTION OF REFERENCE CHARACTERS

- 1: TFT Substrate
- 2: CF Substrate
- 3: Liquid Crystal Layer
- 5: Liquid Crystal Display Panel
- 6: First Polarizing Plate
- 7: Second Polarizing Plate
- 21: Base Material Layer
- 22: Recess
- 23: Ridge
- 40: Backlight Unit
- 41: Reflective Sheet
- 42: Small Light Source
- 43: Light Diffusion Layer
- 43a: First Surface
- 43b: Second Surface
- 44: Color Conversion Sheet
- 45: First Prism Sheet
- 46: Second Prism Sheet
- 47: Luminance Enhancement Sheet
- 50: Liquid Crystal Display Device
- 50a: Display Screen
- 100: Combined Light Diffusion Sheet
- 101: Light Reflection Layer
- 102: Base Material Layer
- 103: Light Reflection Sheet

## Claims

1. A combined light diffusion sheet, comprising:
a light reflection layer configured to reflect visible light; and
a light diffusion layer provided on a base material which is the same as the light reflection layer is provided,
wherein
an average light reflectance of the light reflection layer against visible light is 50% or more and 90% or less.

2. The combined light diffusion sheet of claim 1, wherein
the light diffusion layer has a first surface provided with a plurality of recesses each having a substantially inverted polygon pyramid shape or a substantially inverted truncated polygon pyramid shape, and a second surface as a flat surface or a matte surface, and
the light reflection layer is provided on the second surface.

3. A combined light diffusion sheet, comprising:
a light reflection layer configured to reflect visible light; and
a light diffusion layer provided on a base material which is different from the light reflection layer is provided,
wherein
an average light reflectance of the light reflection layer against visible light is 50% or more and 90% or less.

4. The combined light diffusion sheet of any one of claims 1 to 3, wherein
an average light reflectance of the light reflection layer against visible light is 60% or more and 90% or less.

5. The combined light diffusion sheet of any one of claims 1 to 3, comprising:
the light diffusion layer includes two or more light diffusion layers.

6. The combined light diffusion sheet of any one of claims 1 to 3, comprising:
the light reflection layer includes two or more light reflection layers.

7. The combined light diffusion sheet of any one of claims 1 to 3, wherein
the light diffusion layer has a thickness of 50 µm or more and 1200 µm or less.

8. A backlight unit built in a liquid crystal display device so as to lead light emitted from a plurality of light sources toward a display screen via a luminance enhancement sheet configured to increase luminance of the light, comprising:
the combined light diffusion sheet of any one of claims 1 to 3 between the luminance enhancement sheet and the plurality of light sources.

9. The backlight unit of claims 8, further comprising:
a color conversion sheet provided between the luminance enhancement sheet and the plurality of light sources and configured to convert a wavelength of light emitted from the plurality of light sources.

10. The backlight unit of claims 8, wherein
the plurality of light sources are arranged on a reflective sheet provided opposite to the display screen when viewed from the combined light diffusion sheet.

11. The backlight unit of claims 8, wherein
the combined light diffusion sheet includes the light diffusion layer including a plurality of light diffusion layers, and
the light reflection layer is provided closer to the luminance enhancement sheet than a light diffusion layer which is one of the plurality of the light diffusion layers and which is closest to the plurality of light sources.

12. The backlight unit of claim 11, wherein
the light diffusion layer includes three or more light diffusion layers, and
the light reflection layer is provided closer to the luminance enhancement sheet than a light diffusion layer which is one of the plurality of the light diffusion layers and which is second closest to the plurality of light sources.

13. The backlight unit of claim 11, wherein
the light reflection layer is provided closer to the luminance enhancement sheet than a light diffusion layer which is one of the plurality of the light diffusion layers and which is most distant from the plurality of light sources.

14. The backlight unit of claims 8, wherein
the combined light diffusion sheet includes the light diffusion layer including a plurality of light diffusion layers, and
the light reflection layer is provided on a light incident surface of a light diffusion layer which is one of the plurality of the light diffusion layers and which is most distant from the plurality of light sources.

15. The backlight unit of claims 8, wherein
the combined light diffusion sheet includes the light diffusion layer including a plurality of light diffusion layers each provided on a base material which is different from the light reflection layer is provided, and
the light reflection layer is arranged between a light diffusion layer which is one of the plurality of the light diffusion layers and which is most distant from the plurality of light sources and a light diffusion layer which is another one of the plurality of light diffusion layers and which is second distant from the plurality of light sources.

16. A liquid crystal display device, comprising:
the backlight unit of claims 8; and
a liquid crystal display panel.

17. An information equipment, comprising:
the liquid crystal display device of claims 16.
